# FASCICULE DE BREVET EUROPEEN

(11) **EP 3 397 801 B1**
(45) Date de publication et mention de la délivrance du brevet: **08.07.2020**
(21) Numéro de dépôt: 16829286.0
(22) Date de dépôt: 23.12.2016
(51) Int. Cl.: D04H 1/4209, D04H 1/732, D01G 9/00, E04F 21/08

(54) **PROCEDE DE PREPARATION D'UN PRODUIT D'ISOLATION A BASE DE LAINE, NOTAMMENT MINERALE**
VERFAHREN ZUR HERSTELLUNG EINES DÄMMPRODUKTES AUS WOLLE, INSBESONDERE STEINWOLLE
METHOD FOR PREPARING AN INSULATING PRODUCT MADE OF WOOL, IN PARTICULAR ROCK WOOL

(30) Priorité: 29.12.2015 FR 1563437
(43) Date de publication de la demande: 07.11.2018
(73) Titulaire: SAINT-GOBAIN ISOVER, 92400 Courbevoie (FR)
(72) Inventeur: DOVETTA, Nicolas, 92340 Bourg la reine (FR); SIBAND, Mathilde, 75010 Paris (FR); DE FRANCQUEVILLE, Foucault, 92130 Issy les Moulineaux (FR)
(74) Mandataire: Saint-Gobain Recherche
(86) Numéro de dépôt international: PCT/FR2016/053662
(87) Numéro de publication internationale: WO 2017/115045

(56) Documents cités:
- JP-A- 2006 097 203
- US-A1- 2006 266 429
- US-A1- 2013 221 567

## Description

L'invention concerne un procédé de préparation d'un produit d'isolation comprenant de la laine, de préférence minérale, un dispositif permettant de préparer un produit d'isolation, et un procédé d'isolation thermique.

La laine minérale est un très bon isolant thermique et acoustique car elle comprend des fibres minérales enchevêtrées qui lui confère une structure poreuse et élastique. Une telle structure permet d'emprisonner de l'air et d'absorber ou atténuer les bruits. En outre, la laine minérale est fabriquée essentiellement à partir de matières minérales, notamment naturelles ou de produits recyclés (verre recyclé), et présente ainsi un bilan environnemental intéressant. Enfin, la laine minérale étant à base de matériaux incombustibles par nature, elle n'alimente pas le feu et ne propage pas les flammes. De préférence, la laine minérale est choisie parmi la laine de verre ou la laine de roche.

On distingue d'une part les produits d'isolation de type panneaux ou rouleaux qui se présentent sous forme de plaques ou de matelas de fibres dont la cohésion est assurée par un liant (aussi dénommé encollage) qui lie les fibres entre elles par adhésion ponctuelle, d'autre part des produits de type vrac qui se présentent sous forme de petits paquets de fibres enchevêtrées formant des particules de taille centimétrique dans lesquels aucun agent collant n'assure la cohésion des fibres dans les paquets.

La fabrication de la laine minérale dite en vrac (ou « loose-fill » en anglais) comporte au moins les étapes suivantes :
- une étape de fusion des matières premières telles que du verre, dans un four de fusion,
- une étape de fibrage,
- une étape de formation d'un matelas de laine minérale,
- une étape de nodulation par broyage.

La fabrication de la laine minérale vrac peut comprendre en outre les étapes suivantes :
- une étape d'enduction par des agents tels que des agents anti-statiques et/ou un adjuvant de cohésion, préalablement, concomitamment ou suivant la nodulation, et/ou
- une étape d'ensachage.

A la fin de l'étape de nodulation, la laine minérale est sous forme de nodules ou de flocons. La laine minérale peut alors être utilisée telle quelle comme produit d'isolation en vrac ou isolant en vrac (« loose fill insulation » en anglais) par épandage, soufflage ou remplissage de cavités. Un isolant en vrac correspond, dans le domaine du bâtiment, à une variété de matériaux présentés sous forme de petites particules dont la texture varie de granuleuse à floconneuse.

La laine minérale est avantageusement utilisée sous forme de nodules ou de flocons comme constituant principal dans les produits d'isolation en vrac pour espaces difficiles d'accès tels que les planchers de combles perdus non aménagés ou difficilement accessibles.

Ces produits d'isolation en vrac sont généralement appliqués par soufflage mécanique à l'aide d'une machine à souffler qui permet la projection sur une surface ou l'injection dans une cavité d'un produit d'isolation à partir d'un tuyau de sortie.

Les produits d'isolation en vrac sont donc principalement installés par projection directement dans l'espace à isoler tel que des combles ou par injection dans une cavité murale.

Les produits d'isolation en vrac sont également appelés produits d'isolation à souffler.

Le produit d'isolation une fois soufflé doit être le plus homogène possible pour éviter les ponts thermiques et améliorer ainsi les performances thermiques. Cependant, lorsque le produit d'isolation est soufflé, peu importe le diamètre du tuyau de sortie, la laine minérale sous forme de nodules ou de flocons n'est pas totalement homogène. La conductivité thermique du produit d'isolation résultant n'est pas optimisée.

Plusieurs solutions ont été envisagées pour améliorer l'homogénéité des produits d'isolation en vrac lors du convoi pneumatique.

Les demandes de brevet EP1165998 et US 2006/0266429 divulguent des tuyaux flexibles qui présentent des moyens mécaniques permettant de détendre l'isolant en vrac lors de son installation. Ces moyens mécaniques sont des saillies s'étendant sur la surface interne des tuyaux.

La demande JP 2006/328609 divulgue un procédé complexe pour détendre de la laine de roche avant son stockage en silo, comprenant une étape selon laquelle on transporte des agglomérats de fibres par un flux d'air turbulent qualifié par un nombre de Reynolds supérieur à 200 000, à l'intérieur d'une conduite pourvue de plusieurs séries d'aiguilles et de zones en relief pour que les agglomérats entrant en collision sur ces dernières subissent une ouverture mécanique.

Ces solutions souvent trop complexes ne donnent pas entière satisfaction.

Le demandeur a mis au point un nouveau procédé de préparation permettant d'obtenir un produit d'isolation comprenant de la laine, de préférence minérale, présentant des performances thermiques améliorées.

Le procédé de préparation d'un produit d'isolation à base de laine de l'invention comprend une étape d'aération dans un dispositif comprenant une enceinte et au moins un moyen susceptible de générer un écoulement gazeux turbulent. Lors de cette étape d'aération, un flux de gaz porteur est introduit dans l'enceinte et une laine sous forme de nodules ou de flocons est soumise à l'écoulement turbulent de ce gaz porteur avec entrainement dans un sens selon une direction A, et en sens inverse selon une direction B opposée à la direction A de sorte qu'il existe dans l'enceinte au moins un plan perpendiculaire à la direction A où se croisent de la laine entrainée dans la direction A et de la laine entrainée dans la direction B.

Le profil des vitesses moyennes de la laine minérale dans l'écoulement selon la direction A comprend au moins un point ou une zone de recirculation où la composante de la vitesse parallèle à la direction A est négative ce qui permet de générer l'écoulement selon la direction B. De préférence il existe plusieurs points de recirculation, pour former dans l'écoulement une ou des boucles ou bulles de recirculation.

On note que le procédé de l'invention utilise un écoulement turbulent en régime instationnaire. Les explications fournies dans la présente demande au sujet des profils de vitesse des écoulements concernent des vitesses moyennes dans le temps pendant une durée grande devant celle des fluctuations.

La laine est de préférence une laine minérale, notamment choisie parmi de la laine de verre ou de la laine de roche.

La laine de verre est généralement définie comme un produit obtenu à partir d'une matière minérale en fusion issu d'un mélange de matières premières vitrifiables et transformée en fibre par un procédé le plus souvent centrifuge. La fusion de verre sous forme d'un liquide relativement visqueux produit des fibres relativement longues et fines.

La laine de roche est généralement définie comme un produit obtenu à partir d'une matière minérale en fusion issu de roches naturelles et transformée en fibre par un procédé dit à cascade de rotors. La fusion de roches naturelles sous forme d'un liquide très fluide produit des fibres relativement courtes et épaisses.

L'étape d'aération diminue significativement la densité de la laine, de préférence minérale, sous forme de nodules ou de flocons mais surtout homogénéise sa structure. De manière surprenante, l'expansion et/ou l'homogénéisation de la laine soumise à l'étape d'aération de l'invention est bien meilleure que celle pouvant être obtenue par les procédés connus d'homogénéisation. Le produit d'isolation résultant peut être compacté suite à l'étape d'aération tout en conservant une structure plus homogène.

L'amélioration des performances thermiques se traduit notamment, par rapport aux laines minérales non aérées selon le procédé de l'invention, par une diminution de la conductivité thermique à densité égale ou par une diminution de la densité à conductivité thermique égale. Les produits d'isolation résultant possèdent également à densité égale une résistance à l'air beaucoup plus élevée.

Le procédé de l'invention permet de détendre les nodules ou les flocons de sorte qu'il devient pratiquement impossible de déterminer leur dimension individuelle. Cela peut être démontré par un simple examen visuel des produits d'isolation.

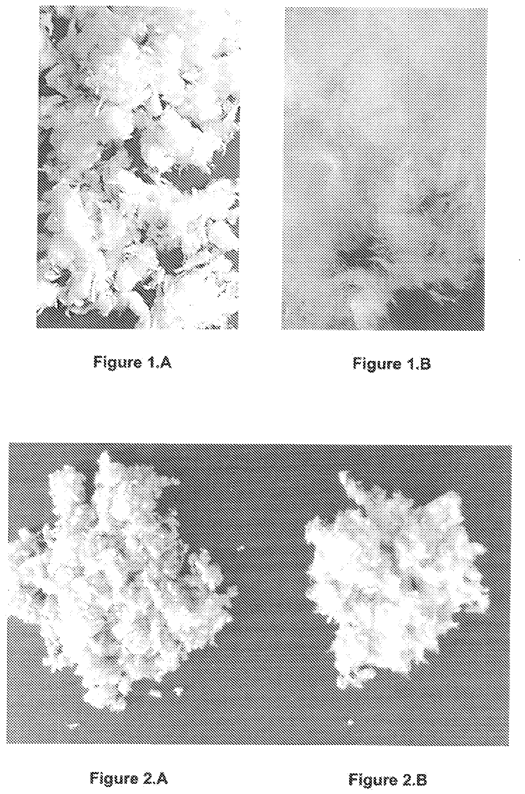

La figure 1 comprend des photographies représentant respectivement :
- Figure 1.A : une laine de verre sous forme de nodules ou de flocons n'ayant pas subi l'étape d'aération selon l'invention et
- Figure 1.B : une laine de verre sous forme de duvet ayant subi l'étape d'aération selon l'invention.
   La figure 2 comprend des photographies représentant respectivement :
   - Figure 2.A : une laine de roche sous forme de nodules ou de flocons n'ayant pas subi l'étape d'aération selon l'invention et
   - Figure 2.B : une laine de roche sous forme de nodules ou de flocons « détendue » ayant subi l'étape d'aération selon l'invention.

La meilleure homogénéité obtenue par le procédé de l'invention ressort clairement du simple examen visuel des produits d'isolation. Ainsi, une laine minérale en vrac obtenue selon l'invention prend une forme nouvelle, que l'on peut qualifier de duvet, car elle est très similaire aux matériaux de garnissage en duvet animal. On entend donc par « duvet » dans la présente demande un produit de laine minérale vrac où les fibres constituant la laine minérale sont quasiment individualisées, et la structure en paquets des flocons a été quasiment détruite.

Bien que le procédé de l'invention convienne tout particulièrement pour les laines minérales, il peut s'appliquer à tout matériau pouvant être qualifié de « laine », c'est à dire de tout matériau composé de fibres positionnées de manière quelconque les unes par rapport aux autres et se présentant sous forme de nodules ou de flocons.

La laine peut être minérale ou organique. Une laine minérale comprend des fibres minérales. Une laine organique comprend des fibres organiques et peut être choisie parmi la laine de coton, la laine de ouate de cellulose, la laine de bois, la laine de chanvre, la laine de lin et la laine de textile recyclé.

L'invention concerne également un dispositif permettant de mettre en œuvre le procédé de l'invention. Le dispositif permet de préparer un produit d'isolation comprenant de la laine. Le dispositif comprend une enceinte (dans laquelle est réalisée l'étape d'aération), des moyens d'introduction d'une laine sous forme de flocons ou de nodules dans l'enceinte, au moins un moyen susceptible d'introduire un écoulement gazeux turbulent dans l'enceinte et de créer au sein de l'enceinte un entrainement de la laine dans un sens selon une direction A et en sens inverse selon une direction B opposée à la direction A de sorte qu'il existe dans l'enceinte au moins un plan perpendiculaire à la direction A, où se croisent de la laine entrainée dans la direction A et de la laine entrainée en sens inverse dans la direction B.

L'invention concerne le produit d'isolation comprenant de la laine, de préférence minérale, susceptible d'être obtenu par le procédé de l'invention.

Enfin, l'invention concerne un procédé d'isolation thermique par projection ou soufflage d'un produit d'isolation directement dans l'espace ou sur la surface à isoler ou par injection d'un produit d'isolation dans une cavité notamment murale ou une paroi à l'aide d'un dispositif selon l'invention.

Les caractéristiques préférées qui figurent dans la suite de la description sont applicables aussi bien au procédé de préparation selon l'invention que, le cas échéant, au dispositif, au produit ou au procédé d'isolation.

Un écoulement turbulent présente un champ de vitesse qui fluctue aléatoirement dans le temps et l'espace. Ces fluctuations se font autour d'un écoulement « moyen » correspondant à une moyenne sur une durée grande devant celle des fluctuations. Selon l'invention, on entend par « écoulement turbulent », un écoulement caractérisé par un nombre de Reynolds supérieur à 2000.

Un écoulement turbulent peut être défini par une vitesse moyenne. La vitesse moyenne de l'écoulement turbulent qui transporte la laine selon la direction A correspond au débit divisé par la section de l'enceinte.

L'enceinte est configurée pour que s'établisse un régime turbulent apte à entraîner la laine, de préférence minérale, dans le gaz porteur en sens inverse selon une direction B opposée à la direction A, à partir d'un point qualifié de point de recirculation. Ce point de recirculation correspond, lorsque l'on représente le profil des vitesses moyennes de l'écoulement selon la direction A, à un point où la composante de la vitesse parallèle à la direction A acquiert une valeur négative ce qui permet de générer l'écoulement selon la direction B (à partir de ce point). Sur la figure 1, A et B représentent deux vecteurs vitesse de même direction et de sens opposé. Par convention, on déclare que la vitesse selon le vecteur A est positive et la vitesse selon le vecteur B est négative.

Les points de recirculation créent une instabilité qui augmente le niveau de turbulence et créent les mouvements de recirculation. La recirculation se produit dans une zone où une quantité « q » de laine, de préférence minérale, suit l'écoulement selon la direction B, c'est-à-dire va à contre-sens par rapport à la direction A et suit une trajectoire en boucle.

La présence de points de recirculation peut être mise en évidence par la présence de bulles de recirculation correspondant à des lignes fermées de courants de vitesse moyenne (dans le temps). Cela n'est pas observé dans un moyen classique de convoi pneumatique dans lequel toute la matière avance toujours dans le même sens moyen.

Un écoulement selon la direction A comprenant un point de recirculation comprend une zone de cisaillement dans laquelle la laine se déplace selon la direction A et une zone de recirculation dans laquelle la laine se déplace selon la direction B.

Lorsque l'on représente le profil des vitesses moyennes dans un plan de l'enceinte perpendiculaire à la direction A, une zone en cisaillement correspond à une variation de l'amplitude de la vitesse perpendiculairement à la direction A. Ainsi, lorsqu'un flocon de laine se trouve dans une telle zone de variation de vitesse, la matière qui le compose sera soumise localement à des vitesses d'entrainement différentes, ce qui crée un effet de cisaillement.

L'effet de cisaillement est encore amplifié si la variation d'amplitude s'accompagne d'un changement de sens du vecteur vitesse, tel qu'il se produit dans une zone de recirculation. Le cisaillement est maximal au point de recirculation ce qui se traduit par une vitesse nulle s'inversant au niveau de ce point. Au-delà du point de recirculation, la laine, de préférence minérale, se trouve donc dans la zone de recirculation. Lorsque l'on représente le profil des vitesses de la laine dans l'écoulement selon la direction A, une zone de recirculation est une zone où la composante de la vitesse parallèle à la direction A est négative ce qui est caractéristique de l'écoulement en sens inverse selon la direction B, c'est-à-dire l'entrainement de la laine minérale selon la direction B opposée à la direction A

La laine, de préférence minérale, subit dans la zone en cisaillement des contraintes mécaniques importantes qui contribuent à « aérer » les fibres. Le passage dans la zone de recirculation permet d'augmenter considérablement le temps où la laine minérale est soumise à de fortes contraintes.

L'écoulement turbulent selon la direction A peut facilement être obtenu par entrainement de la laine à l'aide d'un premier jet d'air. Ce premier jet d'air, comprenant éventuellement la laine sous forme de flocons ou de nodules, pénètre dans l'enceinte à partir d'un orifice d'entrée. Cet orifice d'entrée peut être une buse d'injection, de préférence cylindrique ou une extrémité d'un tuyau d'entrée.

L'écoulement turbulent selon la direction A est de préférence caractérisé par un nombre de Reynolds supérieur à 3 000, de préférence supérieur à 10 000 et mieux supérieur à 100 000. En raison du profil à recirculation de l'écoulement, il n'est pas nécessaire que le caractère turbulent soit extrêmement fort. A cet égard, il peut apparaitre préférable de conserver un nombre de Reynolds inférieur à 150 000.

Le premier jet d'air pénètre dans l'enceinte à partir d'un orifice d'entrée. L'écoulement d'un premier jet d'air au niveau l'orifice d'entrée est caractérisé par un nombre de Reynolds supérieur à 3 000, de préférence supérieur à 10 000 et mieux supérieur à 100 000. Un premier jet d'air caractérisé par un nombre de Reynolds supérieur à 3000 permet d'entrainer la laine, de préférence minérale, et de garantir le caractère turbulent de l'écoulement.

Le procédé de l'invention, contrairement aux systèmes connus, utilise principalement un système pneumatique ou aéraulique dans lequel un gaz, potentiellement comprimé, est utilisé comme moyen d'aération à la place de moyens mécaniques sous forme d'obstacles dans le convoyeur pneumatique. N'importe quel gaz peut convenir à l'exception de la vapeur d'eau. De préférence, le gaz est de l'air. Le premier jet d'air peut être créé par une source d'air comprimé.

Le procédé de l'invention permet de s'affranchir de l'usure des moyens mécaniques. Mais surtout, les procédés connus utilisant ces moyens mécaniques permettent l'expansion ou la détente du produit d'isolation essentiellement par contact avec les moyens mécaniques.

Selon l'invention, le jet d'air permet l'expansion ou la détente de tout produit d'isolation soumis au jet d'air. Par conséquent, une plus grande quantité de produit d'isolation peut être détendue en même temps. L'utilisation d'écoulements turbulents selon l'invention contribue à l'obtention de vitesse de détente satisfaisante. La vitesse de détente correspond au débit massique de produit d'isolation pouvant être obtenu par le procédé de l'invention.

Pour générer un point de recirculation permettant l'entrainement dans un gaz porteur selon une direction B opposée à la direction A plusieurs possibilités sont envisageables.

Selon un premier mode de réalisation, l'entrainement dans un gaz porteur selon une direction B opposée à la direction A est obtenu en choisissant des caractéristiques adaptées :
- pour le premier jet d'air, telles que les dimensions de la section de l'orifice d'entrée et la vitesse de l'air injecté et
- pour l'enceinte, telles que la forme et les dimensions de ladite enceinte.

Le premier jet d'air peut être créé par un système injecteur d'air équipé à sa sortie d'une buse, de préférence cylindrique, ouvrant dans l'enceinte. Les nodules ou flocons présents dans l'enceinte sont entrainés à l'aide du premier jet d'air et forme un écoulement turbulent selon la direction A.

Selon ce mode de réalisation, la section de l'orifice d'entrée correspondant à la section de la buse d'injection doit être suffisamment petite devant la section de l'enceinte pour que ce premier jet d'air soit comparable à un jet libre turbulent dans « l'air ambiant » de l'enceinte, supposé fixe. Le jet est dit « libre » car aucune paroi n'est censée le perturber.

Sur les « bords » du jet, il existe un fort cisaillement (une forte contrainte tangentielle due au frottement des couches de fluide les unes sur les autres). Comme ce fort cisaillement existe, non pas au voisinage d'une paroi (comme c'est le cas dans la conduite cylindrique) mais au voisinage de gaz immobile, ce dernier peut très facilement être mis en mouvement. L'air ambiant est entraîné en mouvement, des tourbillons sont générés au "bord" du jet, à la frontière entre celui-ci et l'air ambiant. Ces tourbillons entraînent avec eux de la laine, de préférence minérale, sous forme de nodules ou de flocons dans la direction B opposée à la direction A.

Au niveau du bord du jet, là où le cisaillement est le plus fort, l'écoulement turbulent selon la direction A comprend plusieurs points de recirculation où la composante de la vitesse parallèle à la direction A est négative et permet ainsi de générer l'écoulement selon la direction B.

Selon ce mode de réalisation, l'entrainement dans un gaz porteur selon une direction B opposée à la direction A est obtenu en choisissant un rapport adapté entre les dimensions de la section de l'orifice d'entrée et une section de l'enceinte dans un plan de l'enceinte perpendiculaire à la direction A.

L'enceinte comprend de préférence une section Se et une longueur L perpendiculaires à la direction A de sorte que :
- les dimensions de la section Se perpendiculaire à la direction A soit suffisantes pour générer un point de recirculation dans un plan de l'enceinte et
- la longueur L perpendiculaire à la direction A soit suffisamment petite pour multiplier les mouvements de recirculation.

Selon ce mode de réalisation, l'étape d'aération dans l'enceinte est réalisée pendant une durée supérieure à 10 secondes, de préférence 30 secondes et mieux 60 secondes.

Selon un autre mode de réalisation, l'entrainement dans un gaz porteur selon une direction B opposée à la direction A est obtenu par l'utilisation d'au moins un jet d'air additionnel dont la direction d'injection de l'air est au moins en partie opposée ou perpendiculaire à la direction A.

Le ou les jets d'air additionnels pénètrent dans l'enceinte à partir d'orifices d'entrée, de préférence de buses d'injection. L'écoulement d'un jet d'air additionnel au niveau de ces orifices d'entrée est caractérisé par un nombre de Reynolds supérieur à 3 000, de préférence supérieur à 10 000 et mieux supérieur à 100 000.

Pour créer un point de recirculation grâce à l'utilisation de jets d'air additionnels, il faut idéalement que la vitesse de l'air qui sort du jet d'air additionnel soit supérieure à la vitesse moyenne de l'écoulement qui transporte la laine, de préférence minérale. Ces jets génèrent une région de recirculation lorsque le rapport des vitesses entre le jet d'air additionnel et le premier jet dépasse une valeur critique.

Selon ce mode de réalisation, le procédé satisfait une ou plusieurs caractéristiques suivantes :
- le nombre de Reynolds du jet d'air additionnel est par ordre de préférence croissant, supérieur à 3000, supérieur à 5000, supérieur à 10000, supérieur à 10000, et/ou
- le nombre de Reynolds du jet d'air additionnel est supérieur au nombre de Reynolds du premier jet d'air qui transporte la laine selon la direction A, et/ou
- la vitesse du jet d'air additionnel est supérieure à la vitesse moyenne de l'écoulement turbulent qui transporte la laine selon la direction A, et/ou
- le rapport entre la vitesse du jet d'air additionnel et la vitesse moyenne de l'écoulement turbulent qui transporte la laine selon la direction A est supérieur à 1, de préférence supérieur à 2 et mieux supérieur à 4.

La vitesse moyenne de l'écoulement turbulent qui transporte la laine, de préférence minérale, selon la direction A est comprise entre 0,5 et 50 m/s. Par ordre de préférence croissant, la vitesse moyenne de l'écoulement turbulent qui transporte la laine, de préférence minérale, selon la direction A peut être comprise entre 5 et 40 m/s ou entre 15 et 35 m/s, ou entre 20 et 30 m/s, ou entre 25 et 30 m/s.

Le produit d'isolation est homogénéisé pendant un temps suffisant pour permettre de modifier l'aspect des nodules ou des flocons.

L'enceinte peut être une partie d'une conduite ou d'un tuyau. Dans ce cas, la vitesse moyenne de l'écoulement turbulent qui transporte la laine minérale est d'au moins 10 m/s, notamment d'au moins 20 m/s ou environ 25 m/s. La partie de tuyau formant l'enceinte peut être délimitée par une section d'entrée qui peut comporter un orifice d'entrée éventuellement pratiqué dans une paroi plein, et par une section de sortie qui peut éventuellement comporter un orifice de sortie pratiqué dans une paroi pleine. La zone d'aération prend ainsi la forme d'une chambre intégrée au tuyau, avec une paroi perpendiculaire à la direction principale du tuyau. L'enceinte d'aération peut également être constituée par une simple section de tuyau tubulaire, dont les dimensions (section, longueur) déterminent la formation de zones de recirculation.

Si le tuyau est un tuyau de soufflage, sa longueur peut avoisiner les 30 à 50 m, l'enceinte d'aération s'étendant sur tout ou partie des 30 à 50 m. Si la longueur L de l'enceinte est de 30 à 50 m, cela signifie qu'une quantité « q » de laine minérale passe en moyenne environ 1 à 5 secondes dans l'enceinte. Lorsque l'enceinte est une partie d'une conduite ou d'un tuyau, l'étape d'aération dans l'enceinte peut être réalisée pendant une durée de quelques secondes, par exemple supérieure à 1 secondes, notamment à 3 secondes, par exemple 5 secondes.

Lorsque l'enceinte fait partie d'un dispositif dédié, elle peut se présenter comme une chambre ou un silo avec un sas d'entrée, un espace confiné dans lequel est réalisée l'aération, et un sas de sortie muni de moyens de fermeture/ouverture commandables suivant un programme de commande tenant compte de temps de séjours paramétrés à l'avance. Par exemple dans une enceinte dédiée présentant une longueur d'environ 1 m, le temps de passage d'une une quantité « q » de laine minérale est d'environ 200 ms. L'étape d'aération dans l'enceinte est réalisée pendant une durée supérieure à 200 ms, de préférence 0,5 s secondes et mieux 1 secondes.

L'étape d'aération peut être réalisée à n'importe quel moment avec un dispositif adapté.

L'étape d'aération peut être réalisée lors de la fabrication de la laine, de préférence minérale, sous forme de nodule ou flocons. Dans ce cas, le procédé de préparation du produit d'isolation comporte au moins les étapes suivantes :
- une étape de fusion des matières premières telles que du verre, dans un four de fusion,
- une étape de fibrage,
- une étape de formation d'un matelas de laine, de préférence minérale,
- une étape de nodulation par broyage,
- éventuellement une étape d'enduction par des agents tels que des agents anti-statiques et/ou un adjuvant de cohésion,
- éventuellement une étape d'ensachage.

L'étape d'aération peut être réalisée après l'étape de nodulation par broyage et avant l'étape d'ensachage. Selon une variante, l'étape d'aération peut être réalisée après l'étape d'ensachage.

Lorsque l'étape d'aération est réalisée après l'étape de nodulation par broyage avant l'étape d'ensachage, le convoyeur pneumatique utilisé pour transporter la laine de verre lors de la fabrication pourra être équipé d'un dispositif pour aérer la laine avant l'étape d'ensachage.

L'étape d'aération peut également être réalisée avant ou pendant l'étape de soufflage.

Les machines de laine minérale à souffler actuelles comprennent des tuyaux de sorties équipés éventuellement à leur extrémité d'un manchon pouvant présenter un diamètre intérieur plus petit que le diamètre intérieur des tuyaux de sortie. La géométrie de l'ensemble constitué par le tuyau de sortie et le manchon correspond à une enceinte présentant une zone convergente. La présence seule d'une zone convergente dans une enceinte n'est pas susceptible de créer des points de recirculation.

Le nombre de Reynolds qualifiant les écoulements dans les machines de laine minérale à souffler actuelles est d'environ 200 000. Le nombre de Reynolds est basé sur :
- le diamètre des tuyaux, environ 0,1 m,
- la vitesse de projection, environ 20 m/s,
- la viscosité cinématique, environ 15.10⁻⁶ m²/s.

Les machines actuelles ne permettent pas d'obtenir un écoulement turbulent présentant un point de recirculation permettant une recirculation de l'air et de la laine minérale.

L'invention concerne également un dispositif permettant de préparer un produit d'isolation comprenant de la laine minérale. Le dispositif comporte avantageusement un moyen pour souffler le produit d'isolation. Dans ce cas, le dispositif est une machine à souffler. Les moyens pour souffler le produit d'isolation comprennent une pompe et des tuyaux.

Enfin, l'invention concerne également un procédé d'isolation thermique. Les espaces à isoler sont de préférence des planchers de combles perdus, des espaces arrière ou au-dessus de plafonds suspendus, ou des cavités de cloisons séparatives ou de murs creux.

Lorsque le dispositif comporte en outre un moyen pour souffler le produit d'isolation, le procédé comporte une étape de soufflage. L'étape de soufflage est alors réalisée à l'aide d'une machine à souffler. La laine minérale est expulsée par un tuyau de sortie à l'aide d'une pompe ou d'une turbine.

L'étape d'aération peut être réalisée lors de l'étape de soufflage en adaptant les machines à souffler. Dans ce cas, l'écoulement turbulent peut facilement être obtenu par entrainement de la laine minérale à l'aide d'un jet d'air. Ce jet d'air peut être créé par une source d'air comprimé utilisant éventuellement la pompe de la machine à souffler.

Le produit d'isolation selon l'invention est essentiellement à base de laine, de préférence minérale, détendue. Selon l'invention, on appelle :
- laine sous forme de nodules ou de flocons non-aérée, une laine n'ayant pas subi une étape d'aération selon l'invention,
- laine sous forme de duvet ou laine sous forme de nodules ou de flocons détendue ou aérée, une laine ayant subi une étape d'aération selon l'invention.

La laine minérale est choisie parmi la laine de verre ou la laine de roche.

Les nodules ou flocons de laine minérale sont des fibres en paquets, et non des fibres individualisées comme les fibres de verre textiles. Ces nodules ou flocons de laine minérale ont une longueur comprise entre 0,05 et 5 cm, notamment entre 0,1 et 1 cm. Ces flocons ou nodules sont formés de fibres qui s'enchevêtrent sous forme de petits paquets, petites mèches ou « bouloches ». Par longueur des flocons ou nodules, on entend dans la présente description la longueur de ces paquets dans leur plus grande dimension.

Idéalement, la laine minérale est suffisamment détendue pour que l'on ne distingue plus aisément les nodules et les flocons.

Lorsque le produit d'isolation comprend de la laine de verre, on ne distingue plus les flocons ou nodules. Le produit d'isolation se présente sous forme d'un duvet, c'est-à-dire un produit en couche de fibres discontinues maintenues déposées ou accumulées ensemble sous une forme analogue à une nappe fibreuse dans laquelle les fibres sont simplement enchevêtrées (et non collées) en une structure lâche et bouffante. Des portions du duvet ou de la nappe peuvent être prélevées sans que la structure volumique ne soit affectée.

La laine de verre comprend des fibres de verre. Des nodules ou flocons en laine de verre produits par fibrage de verre sont par exemple décrits dans le brevet EP 2 511 586 au moyen d'un dispositif comprenant notamment un centrifugeur ou assiette de centrifugation et un panier. Un filet de verre fondu alimente le centrifugeur et s'écoule dans le panier. Les fibres de laine de verre sont mises en nodules comme expliqué dans le document FR-A-2 661 687. Ces fibres de verres sont enchevêtrées.

Les fibres de laine de verre se distinguent des fibres de verre dites « textiles » obtenues par étirement mécanique à grande vitesse du verre en fusion sous la forme de filament calibré.

La laine de verre présente, par ordre de préférence croissant, un micronaire :
- inférieur à 20 L/min, inférieur à 15 L/min, inférieur à 12 L/min, inférieur à 10 L/min,
- supérieur à 2 L/min, supérieur à 3 L/min, supérieur à 4 L/min, supérieur à 5 L/min.

Le micronaire est mesuré selon la méthode décrite dans le document WO-A-03/098209.

Les fibres de verre de la laine de verre sont discontinues. Elles présentent un diamètre moyen de préférence inférieur à 2 µm, voire même inférieur à 1 µm.

Les nodules ou flocons de laine de verre sont par exemple des flocons en laine de verre du type utilisé pour l'isolation en laine soufflée, par exemple du type des laines commercialisées par les sociétés Saint-Gobain Isover sous les marques Comblissimo® ou Kretsull® ou par la société Certainteed sous la marque Insulsafe®. Ces flocons sont généralement dépourvus de liant et peuvent contenir des additifs anti-poussières et/ou anti-statiques tels que des huiles.

La laine de roche comprend des fibres de roche. La laine de roche présente un fasonaire d'au moins 250. Cette grandeur également appelée indice de finesse est mesurée de manière conventionnelle dans le domaine des laines de roche. Le fasonaire est déterminé de la façon suivante : on pèse une éprouvette (5 g) constituée par une touffe de laine minérale exempte d'huile et de liant mais pouvant comporter des composants non fibreux (infibrés ou « slugs » ou « shots »). Cette éprouvette est comprimée dans un volume donné et est traversée par un courant de gaz (air sec ou azote) maintenu à débit constant. La mesure de fasonaire est alors la perte de charge à travers l'éprouvette, évaluée par une colonne d'eau graduée en unité conventionnelle. Classiquement, un résultat de fasonaire est la moyenne des pertes de charge observées pour dix éprouvettes.

Le produit d'isolation comprend, par ordre de préférence croissant, au moins 75 %, au moins 80 %, au moins 85 %, au moins 90 %, au moins 94 %, au moins 95 %, au moins 96 %, au moins 97 %, au moins 98 %, au moins 99 % de laine, de préférence de laine minérale choisie parmi la laine de verre ou la laine de roche, par rapport à la masse totale du produit isolant.

Le produit d'isolation comprend, par ordre de préférence croissant, au moins 75 %, au moins 80 %, au moins 85 %, au moins 90 %, au moins 94 %, au moins 95 %, au moins 96 %, au moins 97 %, au moins 98 %, au moins 99 % de fibres minérale, de préférence de fibres de verre ou de fibres de roche, par rapport à la masse totale d'isolation.

Le produit d'isolation comprend, par ordre de préférence croissant, au moins 75 %, au moins 80 %, au moins 85 %, au moins 90 %, au moins 94 %, au moins 95 %, au moins 96 %, au moins 97 %, au moins 98 %, au moins 99 % de matière minérale par rapport à la masse totale du produit d'isolation.

### II. Exemples

Une laine de verre et une laine de roche, toutes deux sous forme de nodules ou de flocons, non aérées ont été utilisées dans ces exemples.

Avant l'étape d'aération, la laine de verre est sous forme de nodules ou de flocons et comprend des fibres de verre avec un micronaire de 5,6 L/min. Elle présente une densité de 11,6 kg/m³.

Avant l'étape d'aération, la laine de roche est sous forme de nodules ou de flocons et comprend des fibres de roche avec un fasonaire de 250. Elle présente une densité de 74 kg/m³.

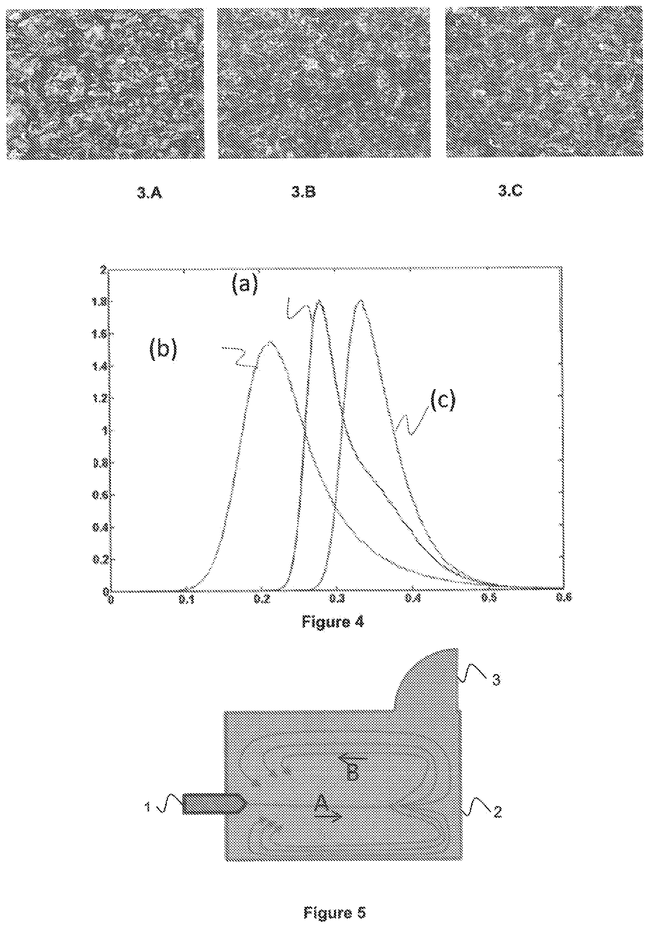

Un dispositif permettant de réaliser l'étape d'aération selon l'invention est illustré sur la figure 5. Ce dispositif comprend :
- un système d'injection d'air 1 générant un premier jet d'air,
- une enceinte 2,
- une ouverture de sortie 3.

Les dimensions de ce dispositif sont les suivantes, 30 cm x 30 cm x 40 cm avec le côté le plus long situé dans la direction du jet.

Pour la laine de verre, le premier jet d'air est un jet « haute pression » à environ 4 Bar de pression d'entrée.

Pour la laine de roche, le premier jet d'air est un jet obtenu à l'aide d'une machine de soufflage fournissant une pression d'entrée suffisante.

La laine minérale sous forme de nodules ou de flocons est introduite dans l'enceinte 2. Par exemple, on introduit en général environ 100 g de laine de verre. Pour la laine de roche, on introduit approximativement la même quantité en volume.

Puis, la laine minérale sous forme de nodules ou de flocons est soumise à un écoulement turbulent par entrainement dans un gaz porteur selon une direction A à l'aide d'un premier jet d'air haute pression généré par le système d'injection d'air 1.

La laine minérale est soumise à un écoulement par entrainement dans un gaz porteur selon une direction B opposée à la direction A de sorte qu'il existe au moins dans un plan de l'enceinte perpendiculaire à la direction A, de la laine minérale entrainée dans la direction A et de la laine minérale entrainée dans la direction B.

L'entrainement dans un gaz porteur selon une direction B opposée à la direction A résulte du choix d'un rapport adapté entre la section du premier jet sur la dimension de l'enceinte. Lorsque l'on représente le profil des vitesses moyennes, il existe au moins un (de préférence) plusieurs points de recirculation dans l'enceinte où la composante de la vitesse suivant la direction A est négative ce qui correspond à un 'écoulement en sens inverse selon la direction B et ainsi des mouvements de recirculation à contre-courant de A.

Cette zone de recirculation correspond à une quantité « q » de laine minérale qui va à un moment donné aller à contre-sens par rapport à la direction A et passer au moins deux fois au même endroit. Les lignes de courants dessinées sur la figure 5 suggèrent qu'une quantité de laine minérale fait quelques boucles en passant au même endroit plusieurs fois.

Les dimensions de l'enceinte sont également adaptées de sorte que :
- les dimensions perpendiculaires à la direction du jet initial soit suffisamment grandes pour générer des points de recirculation dans des plans de l'enceinte et
- la dimension parallèle à la direction du jet soit suffisamment petite pour multiplier les mouvements de recirculation.

Lorsque la laine minérale est suffisamment aérée, le produit d'isolation est expulsé de l'enceinte par l'ouverture de sortie 3, soit par activation d'un mécanisme d'ouverture, soit parce que l'enceinte a été dimensionnée pour que le temps de séjour entre l'entrée de la laine minérale et l'ouverture de sortie corresponde au temps nécessaire pour atteindre le degré d'homogénéisation désiré.

On obtient ainsi un produit d'isolation selon l'invention comprenant :
- de la laine de verre sous forme de duvet, ou
- de la laine de roche sous forme de duvet ou de nodules ou de flocons détendus.

Ce dispositif permet d'aérer 3 kg de produit d'isolation à base de laine de verre par heure.

Les produits d'isolation selon l'invention ont, après l'étape d'aération, des densités faibles notamment d'environ 4 kg/m³ pour des produits à base de laine de verre et d'environ 50 kg/m³ pour des produits à base de laine de roche. Ces produits peuvent subir si nécessaire une étape de compression. L'étape de compression peut être réalisée en pressant le produit entre deux plaques.

Le rapport de la densité avant aération sur la densité après aération est de préférence supérieur à 2, de préférence supérieur à 2,5. La densité est très importante dans le cas de des produits d'isolation à souffler car elle définit le pouvoir couvrant du produit correspondant à la surface que l'on peut recouvrir avec une masse donnée de produit à une hauteur définie.

### 1. Observations visuelles et tomographiques

Les figures 1 et 2 comprennent des photographies représentant respectivement :
- Figure 1.A : une laine de verre sous forme de nodules ou de flocons n'ayant pas subi l'étape d'aération selon l'invention,
- Figure 1.B : un produit d'isolation comprenant de la laine de verre en vrac sous forme de duvet ayant subi l'étape d'aération selon l'invention,
- Figure 2.A : une laine de roche sous forme de nodules ou de flocons n'ayant pas subi l'étape d'aération selon l'invention,
- Figure 2.B : un produit d'isolation comprenant de la laine de roche sous forme de nodules ou de flocons « détendue » ayant subi l'étape d'aération selon l'invention.

Tous les produits selon l'invention ont été obtenus à l'aide du dispositif de la figure 5.

Ces photographies montrent la meilleure homogénéité des produits d'isolation obtenus selon l'invention.

Les images par tomographie de la figure 3 illustrent respectivement :
- Figure 3.A : une laine de verre sous forme de nodules ou de flocons n'ayant pas subi l'étape d'aération selon l'invention présentant une densité de 10 kg/m³,
- Figure 3.B : un produit d'isolation comprenant de la laine de verre en vrac sous forme de duvet ayant subi l'étape d'aération selon l'invention et présentant une densité de 4 kg/m³,
- Figure 3.C : un produit d'isolation comprenant la laine de verre en vrac sous forme de duvet ayant subi l'étape d'aération selon l'invention ainsi qu'une étape de compactage et présentant une densité de 10 kg/m³.

Le traitement de ces images est illustré par le graphique de la figure 4 qui représente les variations en termes de niveau de gris en volume. On trouve en abscisse l'intensité et en ordonné le nombre de pixels présentant cette intensité. Un point de la courbe correspond au nombre de pixels trouvés dans l'image présentant un niveau de gris donné. Les courbes (a), (b) et (c) correspondent respectivement aux produits d'isolation des figures 3.A, 3.B et 3.C.

Ces images ainsi que le traitement de ces images montrent également la meilleure homogénéité des produits d'isolation selon l'invention. Cela se traduit par une meilleure répartition en termes de niveaux de gris. Les produits d'isolations selon l'invention ont des pics plus larges et quasiment gaussiens, alors que la laine de verre non aérée à une distribution plus étroite et asymétrique.

Enfin, le produit d'isolation ayant subi une étape de compactage suite à l'étape d'aération illustré par l'image 3.C conserve ses propriétés avantageuses en termes d'homogénéité. On peut donc grâce l'invention obtenir des produits d'isolation homogènes de densités variables.

### 2. Mesure de la conductivité thermique et de la résistance au passage à l'air

Les mesures de conductivité thermique ont été réalisées sur des produits isolants. La conductivité thermique λ d'un produit est la capacité du produit à se laisser traverser par un flux de chaleur; elle est exprimée en W/(m.K). Plus cette conductivité est faible, plus le produit est isolant, et meilleure est donc l'isolation thermique. Les valeurs de conductivité thermique en fonction de la densité ont été mesurées suivant la norme EN14064.

Des éprouvettes du produit isolant ont été conditionnées en stabilisation en poids à 23°C pour un taux d'humidité relative (HR) d'environ 50%. Les mesures ont été réalisées à une température moyenne de 10°C sur un appareil de type R-Matic sur des caisses de produits de dimensions 590 x 590 mm, à épaisseur érasée à 108 mm mesurée. La zone de mesure proprement dite est de dimension 254 x 254 mm. La conductivité thermique moyenne des produits isolants est donnée dans le tableau ci-dessous.

Les mesures de résistivité au passage de l'air suivant la norme EN29053 (méthode A), ont été réalisées sur les mêmes éprouvettes que celles de mesure de la conductivité thermique.

Plusieurs laines de verre et une laine de roche ont été utilisées pour ces essais.

La conductivité thermique et la résistivité au passage de l'air d'éprouvettes de produits isolants définis ci-après a été mesurée :
- PI LV1 NA : produit isolant comprenant de la laine de verre de type 1 non aérée,
- PI LV1 A produit isolant comprenant de la laine de verre de type 1 aérée,
- PI LV2 NA : produit isolant comprenant de la laine de verre de type 2 non aérée,
- PI LV2 A produit isolant comprenant de la laine de verre de type 2 aérée,
- PI LV3 A produit isolant comprenant de la laine de verre de type 3 aérée,
- PI LV4 A produit isolant comprenant de la laine de verre de type 4 aérée,
- PI LR NA : produit isolant comprenant de la laine de roche non aérée,
- PI LR A produit isolant comprenant de la laine de roche aérée.

| **Produit** | **Rs (Pa.s/m²)** | **590x590 densité (kg/m3)** | **254x254 densité (kg/m3)** | **Lambda (mW/(m.K)** |
|---|---|---|---|---|
| PI LV1 NA | 590 | 9,3 | 9,6 | 50,7 |
| | - | 9,5 | 9,6 | 48,9 |
| PI LV1 A | 5762 | 10,2 | 10,2 | 36,8 |
| | 4990 | 10,1 | 10,1 | 37,1 |
| | 5988 | 10,0 | 10,0 | 39,4 |
| | 6034 | 10,0 | 10,0 | 39,8 |
| | - | 10,1 | 10,1 | 39,8 |
| | 4990 | 9,9 | 9,9 | 40,4 |
| | 4310 | 9,7 | 9,7 | 40,7 |
| PI LV2 NA | 1642 | 11,6 | 11,6 | 46,0 |
| PI LV2 A | 1159 | 5,9 | 6,0 | 51,9 |
| | 5070 | 11,5 | 12,9 | 37,2 |
| PI LV3 A | 628 | 4,1 | 4,1 | 59,3 |
| | 5311 | 10,2 | 12,0 | 36,8 |
| | 6132 | 10,1 | 11,5 | 37,1 |
| PI LV4 A | - | 10,1 | 9,8 | 39,8 |
| | 6374 | 10,0 | 9,6 | 39,8 |
| | 6422 | 10,0 | 9,9 | 39,4 |
| | 5311 | 9,9 | 9,7 | 40,4 |
| | 4587 | 9,7 | 9,8 | 40,7 |
| | 435 | 2,9 | 3,0 | 78,9 |
| | 44615 | 29,5 | 31,2 | 31,6 |
| PI LR NA | 5794 | 72,5 | 74,2 | 38,2 |
| PI LR A | 3525 | 39,1 | 43,0 | 39,1 |
| | 18638 | 64,8 | 71,3 | 35,8 |

En termes de performances, les produits d'isolation selon l'invention obtenus après l'étape d'aération ont une conductivité thermique significativement plus faible.

Les produits d'isolation à base de laine de verre selon l'invention présentent tous une conductivité thermique bien inférieure à 42 mW.m⁻¹.K⁻¹, voir bien inférieure à 41 mW.m⁻¹.K⁻¹ pour des densités comprises entre 9,5 et 10,5 kg/m³.

Un produit d'isolation comprenant de la laine de verre aérée présente un gain de conductivité thermique supérieur à 15 %, de préférence supérieur à 20 % par rapport à un produit d'isolation comprenant de la laine de verre non aérée à densité égale. Pour une performance donnée, il faut deux fois moins de laine de verre pour obtenir la même résistance thermique.

En effet, la laine de verre sous forme de nodules ou de flocons non aérée présente pour une densité de 10 kg/m³, une conductivité thermique d'environ 53 mW.m⁻¹.K⁻¹.

Le produit d'isolation selon l'invention présente, à densité égale, une conductivité thermique d'environ 37 mW.m⁻¹.K⁻¹. Cela correspond à une diminution de 16 mW.m⁻¹.K⁻¹ et à un gain en résistance thermique à épaisseur soufflé égale de 30 %.

Le produit d'isolation selon l'invention présente, à conductivité thermique égale, une densité de 4,8 kg/m³. Cela correspond à une diminution de 5,2 kg/m³ représentant une économie en matière de 52 %.

### II. Variantes de réalisation

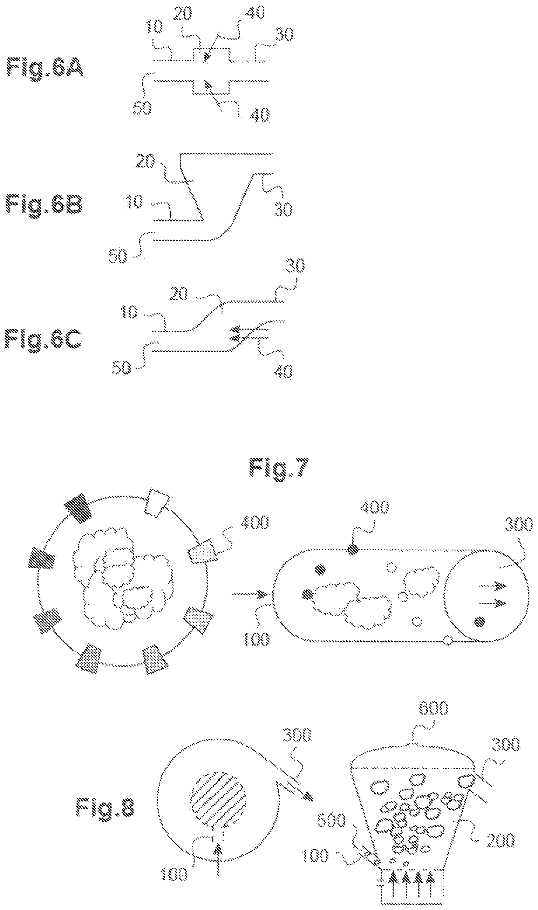

La figure 6 illustre trois variantes de réalisation pouvant notamment s'adapter sur des machines de soufflage.

Chacun de ses dispositifs comprend :
- une enceinte dans laquelle est réalisée l'étape d'aération et
- au moins un moyen susceptible de générer un écoulement turbulent au sein de l'enceinte.

La laine minérale sous forme de nodules ou de flocons est soumise à un écoulement turbulent par entrainement dans un gaz porteur selon une direction A à l'aide d'un premier jet d'air haute pression. Elle arrive dans l'enceinte 20 par un tuyau 10 au niveau d'un orifice d'entrée 50. La recirculation peut être générée par des jets haute pression 40 (figures 6.A et 6.C) et/ou en adaptant la géométrie du dispositif (figures 6.B et 6.C).

Chacun de ces dispositifs comporte donc un moyen susceptible de générer un écoulement par entrainement dans un gaz porteur selon une direction B opposée à la direction A de sorte qu'il existe au moins dans un plan de l'enceinte perpendiculaire à la direction A, de la laine minérale entrainée dans la direction A et de la laine minérale entrainée dans la direction B.

Les dispositifs 6.A et 6.C comportent tous deux des jets d'air additionnels 40 dont la direction de projection dans un plan de l'enceinte perpendiculaire à la direction A est au moins en partie opposée à la direction A. Ce ou ces jets d'air additionnels pénètrent dans l'enceinte à partir de buses d'injection, de préférence cylindriques.

Les dispositifs 6.B et 6.C comportent tous deux une enceinte présentant des dimensions et une section d'orifice entrée 50 permettant et/ou contribuant à l'entrainement dans un gaz porteur selon une direction B opposée à la direction A. Le rapport entre la section d'orifice d'entrée 50 et une section de l'enceinte dans un plan de l'enceinte perpendiculaire à la direction A est adapté pour générer des points de recirculation.

Le produit d'isolation selon l'invention sort par un tuyau de sortie 30.

La figure 7 illustre une variante de réalisation pouvant s'adapter sur n'importe quel tuyau ou conduite et notamment :
- sur un tuyau de convoyage permettant le transport de la laine de minérale sous forme de flocons ou de nodules, par exemple en usine,
- sur un tuyau d'une machine à souffler.

Ce dispositif comprend une couronne de jet d'air haute pression sur le passage de la laine de verre. La figure 7 illustre une partie d'un tuyau ou conduite assurant la fonction d'enceinte comprenant une entrée 100, une sortie 300 et plusieurs jets d'air additionnels dont les orifices d'entrée 400 sont situés directement sur une partie du tuyau. L'air des jets additionnels est de préférence injecté à haute pression.

Ce dispositif comporte des jets d'air additionnels 400 dont la direction de projection dans un plan de l'enceinte perpendiculaire à la direction A est perpendiculaire à la direction A. Ce ou ces jets d'air additionnels pénètrent dans l'enceinte à partir de buses d'injection, de préférence cylindriques.

La figure 8 illustre une autre variante de réalisation comparable à un lit fluidisé. Ce dispositif comprend un moyen d'entrée de la laine minérale sous forme de nodules ou de flocons 100, une enceinte dans laquelle a lieu l'étape d'aération 200, un moyen de sortie du produit d'isolation 300, une arrivé d'air 500 et une sortie d'air 600. Il est possible d'améliorer le régime turbulent ou d'optimiser le temps de passage dans l'enceinte par l'ajout d'arrivée d'air tel que des jets d'air ou d'obstacles mécaniques au niveau de l'enceinte 200. Ce dispositif peut facilement être ajouté dans une ligne de fabrication de laine minérale. Il pourrait par exemple être raccordé à un autre système pneumatique notamment avant une étape de séparation de l'air et des fibres.

## Revendications

1. Procédé de préparation d'un produit d'isolation à base de laine comprenant une étape d'aération dans un dispositif, le dispositif comprend une enceinte et au moins un moyen susceptible de générer un écoulement gazeux turbulent, lors de l'étape d'aération un flux de gaz porteur est introduit dans l'enceinte et une laine sous forme de nodules ou de flocons est soumise à l'écoulement turbulent de ce gaz porteur avec entrainement dans un sens selon une direction A, et en sens inverse selon une direction B opposée à la direction A de sorte qu'il existe dans l'enceinte au moins dans un plan perpendiculaire à la direction A où se croisent de la laine entrainée dans la direction A et de la laine entrainée dans la direction B.

2. Procédé de préparation d'un produit d'isolation selon la revendication 1 **caractérisé en ce que** la laine est une laine minérale, de préférence choisie parmi de la laine de verre ou de la laine de roche.

3. Procédé de préparation d'un produit d'isolation selon la revendication 1 ou 2 **caractérisé en ce que** le profil des vitesses moyennes de la laine dans l'écoulement selon la direction A comprend au moins une zone de recirculation où la composante de la vitesse parallèle à la direction A est négative ce qui permet de générer l'écoulement selon la direction B.

4. Procédé de préparation d'un produit d'isolation selon la revendication 3 **caractérisé en ce que** l'écoulement selon la direction A comprenant un point de recirculation comprend une zone de cisaillement dans laquelle la laine se déplace selon la direction A et une zone de recirculation dans laquelle la laine se déplace selon la direction B.

5. Procédé de préparation d'un produit d'isolation selon l'une quelconque des revendications précédentes **caractérisé en ce que** l'écoulement turbulent selon la direction A est **caractérisé par** un nombre de Reynolds supérieur à 3 000, de préférence supérieur à 10 000 et mieux supérieur à 100 000.

6. Procédé de préparation d'un produit d'isolation selon l'une quelconque des revendications précédentes **caractérisé en ce que** l'écoulement turbulent selon la direction A est obtenu par entrainement de la laine à l'aide d'un premier jet d'air.

7. Procédé de préparation d'un produit d'isolation selon la revendication 6, **caractérisé en ce que** le premier jet d'air pénètre dans l'enceinte à partir d'un orifice d'entrée, de préférence d'une buse d'injection, l'écoulement du premier jet d'air au niveau de l'orifice d'entrée est **caractérisé par** un nombre de Reynolds supérieur à 3 000, de préférence supérieur à 10 000 et mieux supérieur à 100 000.

8. Procédé de préparation d'un produit d'isolation selon l'une quelconque des revendications 6 à 7, **caractérisé en ce que** l'entrainement dans un gaz porteur selon une direction B opposée à la direction A est obtenu en choisissant un rapport adapté entre les dimensions de la section de l'orifice d'entrée et une section de l'enceinte dans un plan de l'enceinte perpendiculaire à la direction A.

9. Procédé de préparation d'un produit d'isolation selon l'une quelconque des revendications précédentes **caractérisé en ce que** l'enceinte comprend une section Se et une longueur L perpendiculaires à la direction A de sorte que les dimensions de la section Se perpendiculaire à la direction A soit suffisantes pour générer un point de recirculation dans un plan de l'enceinte et la longueur L soit suffisamment petite pour multiplier les mouvements de recirculation.

10. Procédé de préparation d'un produit d'isolation selon l'une quelconque des revendications 8 à 9 **caractérisé en ce que** l'étape d'aération dans l'enceinte est réalisée pendant une durée supérieure à 10 secondes, de préférence 30 secondes et mieux 60 secondes.

11. Procédé de préparation d'un produit d'isolation selon l'une quelconque des revendications précédentes **caractérisé en ce que** l'entrainement dans un gaz porteur selon une direction B opposée à la direction A est obtenu par l'utilisation d'au moins un jet d'air additionnel dont la direction d'injection de l'air est au moins en partie opposée (en sens inverse) ou perpendiculaire à la direction A.

12. Procédé de préparation d'un produit d'isolation selon la revendication 11 **caractérisé en ce que** le ou les jets d'air additionnels pénètrent dans l'enceinte à partir de d'orifices d'entrée, de préférence de buses d'injection, l'écoulement d'un jet d'air additionnel au niveau de ces orifices d'entrée est **caractérisé par** un nombre de Reynolds supérieur à 3 000, de préférence supérieur à 10 000 et mieux supérieur à 100 000.

13. Procédé de préparation d'un produit d'isolation selon l'une quelconque des revendications 11 à 12 **caractérisé en ce que** le nombre de Reynolds du jet d'air additionnel est supérieur au nombre de Reynolds du premier jet d'air qui transporte la laine selon la direction A.

14. Procédé de préparation d'un produit d'isolation selon l'une quelconque des revendications 11 à 13 **caractérisé en ce que** la vitesse du jet d'air additionnel est supérieure à la vitesse moyenne de l'écoulement turbulent qui transporte la laine selon la direction A.

15. Procédé de préparation d'un produit d'isolation selon l'une quelconque des revendications 11 à 14 **caractérisé en ce que** le rapport entre la vitesse du jet d'air additionnel et la vitesse moyenne de l'écoulement turbulent qui transporte la laine selon la direction A est supérieur à 1, de préférence supérieur à 2 et mieux supérieur à 4.

16. Procédé de préparation d'un produit d'isolation selon l'une quelconque des revendications précédentes **caractérisé en ce que** la vitesse moyenne de l'écoulement turbulent qui transporte la laine selon la direction A est comprise entre 0,5 et 50 m/s.

17. Procédé de préparation d'un produit d'isolation selon l'une quelconque des revendications précédentes **caractérisé en ce que** l'enceinte est une partie d'une conduite ou d'un tuyau.

18. Procédé de préparation d'un produit d'isolation selon l'une quelconque des revendications précédentes **caractérisé en ce qu'**il comporte au moins les étapes suivantes :
- une étape de fusion des matières premières telles que du verre, dans un four de fusion,
- une étape de fibrage,
- une étape de formation d'un matelas de laine, de préférence minérale,
- une étape de nodulation par broyage,
- éventuellement une étape d'enduction par des agents tels que des agents anti-statiques et/ou un adjuvant de cohésion,
- éventuellement une étape d'ensachage.

19. Procédé de préparation d'un produit d'isolation selon la revendication 18 **caractérisé en ce que** l'étape d'aération est réalisée après l'étape de nodulation par broyage et avant l'étape d'ensachage.

20. Procédé de préparation d'un produit d'isolation selon la revendication 18 **caractérisé en ce que** l'étape d'aération est réalisée après l'étape d'ensachage.

21. Dispositif permettant de préparer un produit d'isolation comprenant de la laine, le dispositif comprenant une enceinte dans laquelle est réalisée une étape d'aération et au moins un moyen susceptible d'introduire un écoulement gazeux turbulent dans l'enceinte, et de créer au sein de l'enceinte un entrainement de la laine dans un sens selon une direction A, et en sens inverse selon une direction B opposée à la direction A de sorte qu'il existe dans l'enceinte au moins un plan perpendiculaire à la direction A où se croisent de la laine entrainée dans la direction A et de la laine entrainée dans la direction B.

22. Dispositif selon la revendication 21 **caractérisé en ce qu'**il comporte en outre un moyen pour souffler le produit d'isolation.

23. Procédé d'isolation thermique par projection directement dans l'espace à isoler ou par injection dans une cavité murale d'un produit d'isolation à l'aide d'un dispositif selon la revendication 21.

24. Procédé d'isolation thermique selon la revendication 23 **caractérisé en ce que** les espaces à isoler sont des planchers de combles perdus, des espaces arrières ou au-dessus de plafonds suspendus, ou des cavités de cloisons séparatives ou de murs creux.

## Patentansprüche

1. Verfahren zur Herstellung eines Dämmprodukts auf Wollbasis, umfassend einen Belüftungsschritt in einer Vorrichtung, wobei die Vorrichtung einen geschlossenen Raum und mindestens ein Mittel umfasst, das in der Lage ist, während des Belüftungsschritts einen turbulenten Gasstrom zu erzeugen, wobei ein Trägergasstrom in den geschlossenen Raum eingeführt wird, und eine Wolle in Form von Knötchen oder Flocken dem turbulenten Strom dieses Trägergases mit Mitführen in einer Richtung in der Richtung A und in umgekehrter Richtung in der Richtung B entgegengesetzt zu der Richtung A ausgesetzt wird, sodass er in dem geschlossenen Raum mindestens in einer Ebene senkrecht zu der Richtung A vorhanden ist, in der sich in der Richtung A mitgeführte Wolle und in der Richtung B mitgeführte Wolle kreuzen.

2. Verfahren zur Herstellung eines Dämmprodukts nach Anspruch 1, **dadurch gekennzeichnet, dass** die Wolle eine Mineralwolle ist, vorzugsweise ausgewählt aus Glaswolle oder Steinwolle.

3. Verfahren zur Herstellung eines Dämmprodukts nach Anspruch 1 oder 2, **dadurch gekennzeichnet, dass** das Profil der mittleren Geschwindigkeiten der Wolle in dem Strom in der Richtung A mindestens eine Rezirkulationszone umfasst, in der die Komponente der Geschwindigkeit parallel zu der Richtung A negativ ist, wodurch der Strom in der Richtung B erzeugbar ist.

4. Verfahren zur Herstellung eines Dämmprodukts nach Anspruch 3, **dadurch gekennzeichnet, dass** der Strom in der Richtung A, die einen Rezirkulationspunkt umfasst, eine Scherzone umfasst, in der sich die Wolle in der Richtung A verlagert, und eine Rezirkulationszone, in der sich die Wolle in der Richtung B verlagert.

5. Verfahren zur Herstellung eines Dämmprodukts nach einem der vorhergehenden Ansprüche, **dadurch gekennzeichnet, dass** der turbulente Strom in der Richtung A durch eine Reynolds-Zahl größer als 3.000, vorzugsweise größer als 10.000 und besser größer als 100.000 gekennzeichnet ist.

6. Verfahren zur Herstellung eines Dämmprodukts nach einem der vorhergehenden Ansprüche, **dadurch gekennzeichnet, dass** der turbulente Strom in der Richtung A durch Mitführen der Wolle mithilfe eines ersten Luftstrahls erhalten wird.

7. Verfahren zur Herstellung eines Dämmprodukts nach Anspruch 6, **dadurch gekennzeichnet, dass** der erste Luftstrahl aus einer Einlassöffnung, vorzugsweise eine Einspritzdüse, in den geschlossenen Raum eintritt, wobei der Strom des ersten Luftstrahls an der Einlassöffnung durch eine Reynolds-Zahl größer als 3.000, vorzugsweise größer als 10.000 und besser noch größer als 100.000 gekennzeichnet ist.

8. Verfahren zur Herstellung eines Dämmprodukts nach einem der Ansprüche 6 bis 7, **dadurch gekennzeichnet, dass** das Mitführen in einem Trägergas in einer Richtung B entgegengesetzt zu der Richtung A durch Auswählen eines geeigneten Verhältnisses zwischen den Abmessungen des Querschnitts der Einlassöffnung und eines Querschnitts des geschlossenen Raums in einer Ebene des geschlossenen Raums senkrecht zu der Richtung A erhalten wird.

9. Verfahren zur Herstellung eines Dämmprodukts nach einem der vorhergehenden Ansprüche, **dadurch gekennzeichnet, dass** der geschlossene Raum einen Querschnitt Se und eine Länge L senkrecht zu der Richtung A aufweist, sodass die Abmessungen des Querschnitts Se senkrecht zu der Richtung A ausreichen, um einen Rezirkulationspunkt in einer Ebene des geschlossenen Raums zu erzeugen, und die Länge L klein genug ist, um die Rezirkulationsbewegungen zu multiplizieren.

10. Verfahren zur Herstellung eines Dämmprodukts nach einem der Ansprüche 8 bis 9, **dadurch gekennzeichnet, dass** der Belüftungsschritt in dem geschlossenen Raum für eine Dauer von mehr als 10 Sekunden, vorzugsweise 30 Sekunden und besser 60 Sekunden durchgeführt wird.

11. Verfahren zur Herstellung eines Dämmprodukts nach einem der vorhergehenden Ansprüche, **dadurch gekennzeichnet, dass** das Mitführen in einem Trägergas in einer Richtung B entgegengesetzt zu der Richtung A durch Verwendung mindestens eines zusätzlichen Luftstrahls erhalten wird, deren Richtung der Lufteinblasung mindestens teilweise entgegengesetzt (in umgekehrter Richtung) oder senkrecht zu der Richtung A ist.

12. Verfahren zur Herstellung eines Dämmprodukts nach Anspruch 11, **dadurch gekennzeichnet, dass** der oder die zusätzlichen Luftstrahl(en) von Einlassöffnungen, vorzugsweise von Einspritzdüsen, in den geschlossenen Raum eintreten, wobei der Strom eines zusätzlichen Luftstrahls an diesen Einlassöffnungen durch eine Reynolds-Zahl größer als 3.000, vorzugsweise größer als 10.000 und besser noch größer als 100.000 gekennzeichnet ist.

13. Verfahren zur Herstellung eines Dämmprodukts nach einem der Ansprüche 11 bis 12, **dadurch gekennzeichnet, dass** die Reynolds-Zahl des zusätzlichen Luftstrahls größer ist als die Reynolds-Zahl des ersten Luftstrahls, der die Wolle in der Richtung A transportiert.

14. Verfahren zur Herstellung eines Dämmprodukts nach einem der Ansprüche 11 bis 13, **dadurch gekennzeichnet, dass** die Geschwindigkeit des zusätzlichen Luftstrahls größer ist als die Durchschnittsgeschwindigkeit des turbulenten Stroms, der die Wolle in der Richtung A transportiert.

15. Verfahren zur Herstellung eines Dämmprodukts nach einem der Ansprüche 11 bis 14, **dadurch gekennzeichnet, dass** das Verhältnis zwischen der Geschwindigkeit des zusätzlichen Luftstrahls und der Durchschnittsgeschwindigkeit des turbulenten Stroms, der die Wolle in der Richtung A transportiert, größer als 1, vorzugsweise größer als 2 und besser noch größer als 4 ist.

16. Verfahren zur Herstellung eines Dämmprodukts nach einem der vorhergehenden Ansprüche, **dadurch gekennzeichnet, dass** die Durchschnittsgeschwindigkeit des turbulenten Stroms, der die Wolle in der Richtung A transportiert, zwischen 0,5 und 50 m/s liegt.

17. Verfahren zur Herstellung eines Dämmprodukts nach einem der vorhergehenden Ansprüche, **dadurch gekennzeichnet, dass** der geschlossene Raum ein Teil eines Kanals oder eines Rohrs ist.

18. Verfahren zur Herstellung eines Dämmprodukts nach einem der vorhergehenden Ansprüche, **dadurch gekennzeichnet, dass** es mindestens die folgenden Schritte umfasst:
- einen Schritt des Schmelzens der Rohstoffe wie Glas in einem Schmelzofen,
- einen Schritt des Zerfaserns,
- ein Schritt des Bildens einer vorzugsweise mineralischen Wollmatratze,
- ein Schritt des Knotenbildens durch Zerkleinern,
- gegebenenfalls einen Schritt des Beschichtens mit Mitteln wie Antistatikmitteln und/oder einem Kohäsionshilfsmittel,
- möglicherweise einen Schritt des Eintütens.

19. Verfahren zur Herstellung eines Dämmprodukts nach Anspruch 18, **dadurch gekennzeichnet, dass** der Belüftungsschritt nach dem Knotenbildungsschritt durch Zerkleinern, und vor dem Schritt des Eintütens durchgeführt wird.

20. Verfahren zur Herstellung eines Dämmprodukts nach Anspruch 18, **dadurch gekennzeichnet, dass** der Belüftungsschritt nach dem Schritt des Eintütens durchgeführt wird.

21. Vorrichtung, die das Herstellen eines Dämmprodukts gestattet, das Wolle umfasst, wobei die Vorrichtung einen geschlossenen Raum umfasst, in dem ein Belüftungsschritt durchgeführt wird, und mindestens ein Mittel, das in der Lage ist, einen turbulenten Gasstrom in den geschlossenen Raum einzuführen und innerhalb des geschlossenen Raums ein Mitführen der Wolle in einer Richtung in der Richtung A und in umgekehrter Richtung in der Richtung B entgegengesetzt zu der Richtung A zu erzeugen, sodass er in dem geschlossenen Raum mindestens in einer Ebene senkrecht zu der Richtung A vorhanden ist, in der sich in der Richtung A mitgeführte Wolle und in der Richtung B mitgeführte Wolle kreuzen.

22. Vorrichtung nach Anspruch 21, **dadurch gekennzeichnet, dass** sie ferner Mittel zum Blasen des Dämmprodukts umfasst.

23. Verfahren zur Wärmedämmung durch Sprühen eines Dämmprodukts direkt in den zu dämmenden Raum oder durch Einleiten in einen Wandhohlraum mithilfe einer Vorrichtung nach Anspruch 21.

24. Verfahren zur Wärmedämmung nach Anspruch 23, **dadurch gekennzeichnet, dass** die zu dämmenden Räume Böden von nicht nutzbaren Dachräumen, Räume hinter oder über abgehängten Decken oder Hohlräume von Trennwänden oder Hohlwänden sind.

## Claims

1. A method for preparing an insulating product based on wool, comprising an aeration step inside a device, the device comprises a chamber and at least one means capable of generating a turbulent gaseous flow, during the aeration step, a stream of carrier gas is introduced into the chamber and a wool in the form of nodules or flakes is subjected to the turbulent flow of this carrier gas with entrainment in one sense in a direction A and in the opposite sense in a direction B that is the opposite to the direction A so that within the chamber there is at least in one plane perpendicular to the direction A in which the wool entrained in the direction A crosses the wool entrained in the direction B.

2. The method for preparing an insulating product as claimed in claim 1, **characterized in that** the wool is a mineral wool, preferably chosen from glass wool and rock wool.

3. The method for preparing an insulating product as claimed in claim 1 or 2, **characterized in that** the profile of the mean speeds of the wool in the flow in the direction A comprises at least one recirculation zone in which the component of the speed parallel to the direction A is negative, thereby making it possible to generate the flow in the direction B.

4. The method for preparing an insulating product as claimed in claim 3, **characterized in that** the flow in the direction A comprising a recirculation point comprises a shear zone in which the wool travels in the direction A and a recirculation zone in which the wool travels in the direction B.

5. The method for preparing an insulating product as claimed in any one of the preceding claims, **characterized in that** the turbulent flow in the direction A is **characterized by** a Reynolds number higher than 3000, preferably higher than 10 000 and better still, higher than 100 000.

6. The method for preparing an insulating product as claimed in any one of the preceding claims, **characterized in that** the turbulent flow in the direction A is obtained by entraining the wool using a first air jet.

7. The method for preparing an insulating product as claimed in claim 6, **characterized in that** the first air jet enters the chamber from an inlet orifice, preferably an injection nozzle, the flow of the first air jet at the level of the inlet orifice is **characterized by** a Reynolds number higher than 3000, preferably higher than 10 000, and better still, higher than 100 000.

8. The method for preparing an insulating product as claimed in either one of claims 6 and 7, **characterized in that** the entrainment in a carrier gas in a direction B that is the opposite to the direction A is obtained by choosing a suitable ratio between the dimensions of the cross section of the inlet orifice and a cross section of the chamber in a plane of the chamber perpendicular to the direction A.

9. The method for preparing an insulating product as claimed in any one of the preceding claims, **characterized in that** the chamber comprises a cross section Se and a length L both perpendicular to the direction A which are such that the dimensions of the cross section Se perpendicular to the direction A are sufficient to generate a recirculation point in a plane of the chamber, and the length L is short enough that the recirculation movements are multiplied.

10. The method for preparing an insulating product as claimed in either one of claims 8 and 9, **characterized in that** the aeration step inside the chamber is performed for a duration longer than 10 seconds, preferably 30 seconds and better still, 60 seconds.

11. The method for preparing an insulating product as claimed in any one of the preceding claims, **characterized in that** the entrainment in a carrier gas in a direction B that is the opposite to the direction A is obtained by the use of at least one additional air jet for which the direction in which the air is injected is at least partially the opposite of (in the opposite direction to) or perpendicular to the direction A.

12. The method for preparing an insulating product as claimed in claim 11, **characterized in that** the additional air jet or jets enter the chamber from inlet orifices, preferably injection nozzles, the flow from an additional air jet at the level of these inlet orifices is **characterized by** a Reynolds number higher than 3000, preferably higher than 10 000, and better still, higher than 100 000.

13. The method for preparing an insulating product as claimed in either one of claims 11 and 12, **characterized in that** the Reynolds number of the additional air jet is higher than the Reynolds number of the first air jet which carries the wool in the direction A.

14. The method for preparing an insulating product as claimed in any one of claims 11 to 13, **characterized in that** the speed of the additional air jet is higher than the mean speed of the turbulent flow that carries the wool in the direction A.

15. The method for preparing an insulating product as claimed in any one of claims 11 to 14, **characterized in that** the ratio between the speed of the additional air jet and the mean speed of the turbulent flow that carries the wool in the direction A is greater than 1, preferably greater than 2, and better still, greater than 4.

16. The method for preparing an insulating product as claimed in any one of the preceding claims, **characterized in that** the mean speed of the turbulent flow which carries the wool in the direction A is comprised between 0.5 and 50 m/s.

17. The method for preparing an insulating product as claimed in any one of the preceding claims, **characterized in that** the chamber is part of a duct or of a pipe.

18. The method for preparing an insulating product as claimed in any one of the preceding claims, **characterized in that** it comprises at least the following steps:
- a step of melting the raw materials such as glass, in a melting furnace,
- a fiberizing step,
- a step of forming a mat of wool, preferably mineral wool,
- a step of nodulation using grinding,
- possibly a step of coating with agents such as antistatic agents and/or a cohesion additive,
- possibly a bagging step.

19. The method for preparing an insulating product as claimed in claim 18, **characterized in that** the aeration step is performed after the step of nodulation by grinding and before the bagging step.

20. The method for preparing an insulating product as claimed in claim 18, **characterized in that** the aeration step is performed after the bagging step.

21. A device allowing preparation of an insulating product comprising wool, the device comprising a chamber in which an aeration step is performed and at least one means capable of introducing a turbulent gaseous flow into the chamber and of creating within the chamber an entrainment of the wool in one sense in a direction A, and in the opposite sense in a direction B that is the opposite of the direction A so that within the chamber there is at least one plane perpendicular to the direction A in which the wool entrained in the direction A crosses the wool entrained in the direction B.

22. The device as claimed in claim 21, **characterized in that** it further comprises a means for blowing the insulating product.

23. A method of thermal insulation by spraying an insulating product directly into the space that is to be insulated or by injecting it into a wall cavity, using a device as claimed in claim 21.

24. The method of thermal insulation as claimed in claim 23, **characterized in that** the spaces to be insulated are floors of roof spaces not suitable for conversion, spaces behind or above suspended ceilings, or cavities in partition walls or hollow walls.
